# EUROPEAN PATENT APPLICATION

(11) **EP 3 203 791 A1**
(43) Date of publication of application: **09.08.2017**
(21) Application number: 15858065.4
(22) Date of filing: 20.08.2015
(51) Int. Cl.: H04W 64/00

(54) **METHOD AND DEVICE FOR ENHANCING POSITIONING**

(30) Priority: 05.11.2014 CN 201410619252
(71) Applicant: ZTE Corporation, Shenzhen, Guangdong 518057 (CN)
(72) Inventor: LU, Zhaohua, Shenzhen Guangdong 518057 (CN); DAI, Bo, Shenzhen Guangdong 518057 (CN); CHEN, Shijun, Shenzhen Guangdong 518057 (CN); LI, Yong, Shenzhen Guangdong 518057 (CN); LIU, Kun, Shenzhen Guangdong 518057 (CN)
(74) Representative: Awapatent AB
(86) International application number: PCT/CN2015/087683
(87) International publication number: WO 2016/070671

(57) **Abstract**

The embodiments of the present invention provide a method and a device for enhancing positioning. The method includes: a first communication node acquiring positioning solution adjustment information, herein the positioning solution adjustment information at least contains one of the following: positioning error information for indicating a positioning error of a second communication node and positioning mode adjustment indication information; and the first communication node adjusting a positioning solution.

## Description

### Technical Field

This text relates to but is not limited to the field of positioning, in particular to a method and a device for enhancing positioning.

### Background

With the continuous development of the era, the positioning technique is increasingly concerned and a higher technical requirement is made to positioning accuracy.

For a GPS positioning technique, due to reasons such as signal loss, indoor signals become weak and consequently positioning terminals cannot search enough satellites; and for a cellular network system, since positioning errors are very great, enough accuracy cannot be achieved both indoors and outdoors and the positioning accuracy demand which increases continuously cannot be satisfied.

In order to solve the problem of high-accuracy positioning, usually a wireless positioning system is established on the ground, all positioning signal stations of the wireless positioning system are arranged near the ground and the positioning implementation ways are various, for example, a ground pseudolite system adopting a satellite system, a wireless local area network system and the like, herein the ground pseudolite system requires mobile phones to be capable of processing coexistence of ground satellite and space satellite signals and makes a very high requirement on a dynamic range thereof; and the wireless local area network system mainly adopts a ranging method based on signal strength and the positioning accuracy greatly depends on the density of laid networks.

It can be seen that, in order to satisfy the high-accuracy positioning demand, different positioning systems adopt different positioning solutions. However, the performance of the positioning solutions is easily influenced by the change of environmental factors such as arrival time and arrival time difference, the positioning accuracy of methods for calculating propagation distance through time is easily influenced by multipath channel propagation, the positioning accuracy of positioning algorithms based on fingerprints such as signal strength and signal statistical information is easily influenced by movement, change and the like of objects in an environment, and the positioning accuracy of positioning algorithms based on natural features such as gravity fields and magnetic fields is easily influenced by geological changes, universe changes and the like.

### Summary

The following is a summary of the subject described in this text in detail. The summary is not used for limiting the protection scope of the claims.

An embodiment of the present invention provides a solution for enhancing positioning, which can help a positioning system to adaptively adjust a positioning solution according to actual changes of environmental factors and improve positioning accuracy.

An embodiment of the present invention provides a method for enhancing positioning, including:
a first communication node acquiring positioning solution adjustment information, herein the positioning solution adjustment information at least contains one of the following: positioning error information for indicating a positioning error of a second communication node and positioning mode adjustment indication information; and the first communication node adjusting a positioning solution.

In an exemplary embodiment, the first communication node adjusting the positioning solution includes: the first communication node adjusting the positioning solution according to the positioning solution adjustment information.

In an exemplary embodiment, the positioning solution adjustment information is generated by the second communication node, or is generated by an upper network element of the first communication node, or is generated by the first communication node.

In an exemplary embodiment, the second communication node, or the upper network element or the first communication node which generates the positioning solution adjustment information has already known an actual geographic location of the second communication node.

The first communication node acquiring the positioning solution adjustment information includes:
the second communication node or the upper network element comparing the actual geographic location of the second communication node with a calculated location of the second communication node, generating the positioning solution adjustment information when an error between the actual geographic location and the calculated location is greater than a preset range, and sending the positioning solution adjustment information to the first communication node;
or the first communication node comparing the actual geographic location of the second communication node with a calculated location of the second communication node and generating the positioning solution adjustment information when an error between the actual geographic location and the calculated location is greater than a preset range.

In an exemplary embodiment, before the first communication node acquires the positioning solution adjustment information, the method further includes: the first communication node sending a first positioning reference signal.

In an exemplary embodiment, before the first communication node acquires the positioning solution adjustment information, the method further includes:
the first communication node receiving, from the second communication node, information which is generated by the second communication node by using the first positioning reference signal and is used for positioning a location of the second communication node; and
the first communication node or an upper node of the first communication node obtaining a calculated location of the second communication node according to the information which is used for positioning the location of the second communication node.

In an exemplary embodiment, the first communication node adjusting the positioning solution includes: the first communication node increasing a sending density of the first positioning reference signal according to the positioning solution adjustment information.

In an exemplary embodiment, the first communication node adjusting the positioning solution includes: the first communication node increasing a sending power of the first positioning reference signal according to the positioning solution adjustment information.

In an exemplary embodiment, the first communication node adjusting the positioning solution includes: the first communication node sending a second positioning reference signal according to the positioning solution adjustment information.

In an exemplary embodiment, a generation mode of the second positioning reference signal is different from a generation mode of the first positioning reference signal.

In an exemplary embodiment, in a long term evolution frame, a subframe set which allows sending of the second positioning reference signal is different from a subframe set which allows sending of the first positioning reference signal.

In an exemplary embodiment, in a physical resource block of a long term evolution frame, a subcarrier which is used for sending the second positioning reference signal is different from a subcarrier which is used for sending the first positioning reference signal.

In an exemplary embodiment, physical resource blocks used when the second positioning reference signal and the first positioning reference signal are sent on a same subframe of a long term evolution frame are different.

In an exemplary embodiment, the first positioning reference signal is a positioning reference signal in Long Term Evolution LTE current standard.

In an exemplary embodiment, the first communication node adjusting the positioning solution includes: the first communication node sending correction information according to the positioning solution adjustment information.

In an exemplary embodiment, the correction information is generated based on the positioning error information in the positioning solution adjustment information.

In an exemplary embodiment, the first communication node adjusting the positioning solution includes: the first communication node sending positioning mode indication information which is used for indicating the second communication node to use a designated positioning mode according to the positioning solution adjustment information.

The embodiment of the present invention further provides a method for enhancing positioning, including:
a third communication node receiving positioning information sent by a first communication node, herein the positioning information is obtained by the first communication node according to obtained positioning solution adjustment information, the positioning solution adjustment information at least contains one of the following: positioning error information and positioning mode adjustment indication information; and the third communication node acquiring information for indicating a location of the third communication node.

In an exemplary embodiment, the third communication node acquiring the information for indicating the location of the third communication node includes: the third communication node acquiring the information for indicating the location of the third communication node according to the positioning information.

In an exemplary embodiment, the positioning solution adjustment information is generated by a second communication node, or an upper network element of the first communication node, or the first communication node.

In an exemplary embodiment, the second communication node, or the upper network element or the first communication node which generates the positioning solution adjustment information has already known an actual geographic location of the second communication node; and generates the positioning solution adjustment information when an error between the actual geographic location of the second communization node and a calculated location of the second communication node is greater than a preset range.

In an exemplary embodiment, the positioning information is the first positioning reference signal with a greater density.

In an exemplary embodiment, the positioning information is the first positioning reference signal sending power with a higher power.

In an exemplary embodiment, the positioning information is a second positioning reference signal.

In an exemplary embodiment, a generation mode of the second positioning reference signal is different from a generation mode of the first positioning reference signal.

In an exemplary embodiment, in a long term evolution frame, a subframe set which allows sending of the second positioning reference signal is different from a subframe set which allows sending of the first positioning reference signal.

In an exemplary embodiment, in a physical resource block of a long term evolution frame, a subcarrier which is used for carrying the second positioning reference signal is different from a subcarrier which is used for carrying the first positioning reference signal.

In an exemplary embodiment, physical resource blocks used when the second positioning reference signal and the first positioning reference signal are carried on a same subframe of a long term evolution frame are different.

In an exemplary embodiment, the first positioning reference signal is a positioning reference signal in Long Term Evolution LTE current standard

In an exemplary embodiment, the positioning information is correction information; and the correction information is generated based on the positioning error information in the positioning solution adjustment information.

In an exemplary embodiment, the positioning information is positioning mode indication information which is used for indicating the third communication node to use a designated positioning mode.

In an exemplary embodiment, the information for indicating the location of the third communication node at least includes one of the following: arrival time difference information measured by the third communication node; positioning reference signal strength indication information measured by the third communication node; information of communication nodes close to the third communication node; positioning location information calculated by the third communication node; and positioning mode information of the third communication node.

In an exemplary embodiment, the third communication node and the second communication node are the same communication node.

The embodiment of the present invention further provides a device for enhancing positioning, arranged in a first communication node, including:
an acquisition module configured to acquire positioning solution adjustment information, herein the positioning solution adjustment information at least contains one of the following: positioning error information indicating a positioning error of a second communication node and positioning mode adjustment indication information; and an adjustment module configured to adjust a positioning solution.

In an exemplary embodiment, that the adjustment module adjusts the positioning solution refers to that: the adjustment module adjusts the positioning solution according to the positioning solution adjustment information.

In an exemplary embodiment, the positioning solution adjustment information is generated by the second communication node, or is generated by an upper network element of the first communication node, or is generated by the acquisition module.

In an exemplary embodiment, the second communication node, or the upper network element or the acquisition module which generates the positioning solution adjustment information has already known an actual geographic location of the second communication node.

That the acquisition module acquires the positioning solution adjustment information refers to that:
the acquisition module receives the positioning solution adjustment information from the second communication node or the upper network element; and the second communication node or the upper network element compares the actual geographic location of the second communication node with a calculated location of the second communication node, and generates the positioning solution adjustment information when an error between the actual geographic location and the calculated location is greater than a preset range;
or the acquisition module compares the actual geographic location of the second communication node with a calculated location of the second communication node and generates the positioning solution adjustment information when an error between the actual geographic location and the calculated location is greater than a preset range.

In an exemplary embodiment, the acquisition module is further configured to send a first positioning reference signal.

In an exemplary embodiment, herein, before the first communication node acquires the positioning solution adjustment information, the acquisition module is further configured to, before acquiring the positioning solution adjustment information, receive, from the second communication node, information which is generated by the second communication node by using the first positioning reference signal and is used for positioning a location of the second communication node; and obtain a calculated location of the second communication node according to the information which is used for positioning the location of the second communication node.

In an exemplary embodiment, that the adjustment module adjusts the positioning solution refers to that: the adjustment module increases a sending density of the first positioning reference signal according to the positioning solution adjustment information.

In an exemplary embodiment, that the adjustment module adjusts the positioning solution refers to that: the adjustment module increases a sending power of the first positioning reference signal according to the positioning solution adjustment information.

In an exemplary embodiment, that the adjustment module adjusts the positioning solution refers to that: the adjustment module sends a second positioning reference signal according to the positioning solution adjustment information.

In an exemplary embodiment, a generation mode of the second positioning reference signal is different from a generation mode of the first positioning reference signal.

In an exemplary embodiment, in a long term evolution frame, a subframe set which allows sending of the second positioning reference signal is different from a subframe set which allows sending of the first positioning reference signal.

In an exemplary embodiment, in a physical resource block of a long term evolution frame, a subcarrier which is used for sending the second positioning reference signal is different from a subcarrier which is used for sending the first positioning reference signal.

In an exemplary embodiment, physical resource blocks used when the second positioning reference signal and the first positioning reference signal are sent on the same subframe of a long term evolution frame are different.

In an exemplary embodiment, the first positioning reference signal is a positioning reference signal in Long Term Evolution LTE current standard.

In an exemplary embodiment, that the adjustment module adjusts the positioning solution refers to that: the adjustment module sends correction information according to the positioning solution adjustment information.

In an exemplary embodiment, the adjustment module generates the correction information based on the positioning error information in the positioning solution adjustment information.

In an exemplary embodiment, that the adjustment module adjusts the positioning solution refers to that: the adjustment module sends positioning mode indication information which is used for indicating the second communication node to use a designated positioning mode according to the positioning solution adjustment information.

The embodiment of the present invention further provides a device for enhancing positioning, arranged in a third communication node, including:
a receiving module configured to receive positioning information sent by a first communication node, herein the positioning information is obtained by the first communication node according to obtained positioning solution adjustment information, the positioning solution adjustment information at least contains one of the following: positioning error information and positioning mode adjustment indication information; and an information acquisition module configured to acquire information for indicating a location of the third communication node.

In an exemplary embodiment, that the information acquisition module acquires the information indicating the location of the third communication node refers to that: the information acquisition module acquires the information for indicating the location of the third communication node according to the positioning information.

In an exemplary embodiment, the positioning solution adjustment information is generated by a second communication node, or an upper network element of the first communication node, or the first communication node.

In an exemplary embodiment, the second communication node, or the upper network element or the first communication node which generates the positioning solution adjustment information has already known an actual geographic location of the second communication node; and generates the positioning solution adjustment information when an error between the actual geographic location of the second communization node and a calculated location of the second communication node is greater than a preset range.

In an exemplary embodiment, the positioning information is the first positioning reference signal with a greater density.

In an exemplary embodiment, the positioning information is the first positioning reference signal sending power with higher power.

In an exemplary embodiment, the positioning information is a second positioning reference signal.

In an exemplary embodiment, a generation mode of the second positioning reference signal is different from a generation mode of the first positioning reference signal.

In an exemplary embodiment, in a long term evolution frame, a subframe set which allows sending of the second positioning reference signal is different from a subframe set which allows sending of the first positioning reference signal.

In an exemplary embodiment, in a physical resource block of a long term evolution frame, a subcarrier which is used for carrying the second positioning reference signal is different from a subcarrier which is used for carrying the first positioning reference signal.

In an exemplary embodiment, physical resource blocks used when the second positioning reference signal and the first positioning reference signal are carried on a same subframe of a long term evolution frame are different.

In an exemplary embodiment, the first positioning reference signal is a positioning reference signal in Long Term Evolution LTE current standard.

In an exemplary embodiment, the positioning information is correction information; and the correction information is generated based on the positioning error information in the positioning solution adjustment information.

In an exemplary embodiment, the positioning information is positioning mode indication information which is used for indicating the third communication node to use a designated positioning mode.

In an exemplary embodiment, the information for indicating the location of the third communication node at least includes one of the following: arrival time difference information measured by the third communication node; positioning reference signal strength indication information measured by the third communication node; information of communication nodes close to the third communication node; positioning location information calculated by the third communication node; and positioning mode information of the third communication node.

In an exemplary embodiment, the third communication node and the second communication node are the same communication node.

The embodiment of the present invention provides a solution for enhancing positioning, which can help a positioning system to adaptively adjust a positioning solution according to actual changes of environmental factors and improve positioning accuracy, such that better location-based services can be provided on this basis.

After the drawings and detailed description are read and understood, other aspects may be understood.

### Brief Description of Drawings

FIG. 1 illustrates a flowchart of a method for enhancing positioning in implementation mode one.
FIG. 2 illustrates a flowchart according to embodiment 1.
FIG. 3 illustrates a flowchart according to embodiment 2.
FIG. 4 illustrates a flowchart according to embodiment 3.
FIG. 5 illustrates a flowchart according to embodiment 6.
FIG. 6 illustrates a flowchart according to embodiment 8.
FIG. 7 illustrates a flowchart according to embodiment 13.
FIG. 8 illustrates a flowchart according to embodiment 16.
FIG. 9 illustrates a structural diagram of a device for enhancing positioning in implementation mode three.

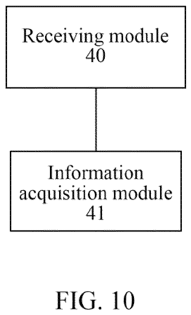

FIG. 10 illustrates a structural diagram of a device for enhancing positioning in implementation mode four.

### Detailed Description

The technical solution of the embodiments of the present invention will be described below in more detail with reference to the drawings.

It needs to be stated that the embodiments of the present invention and all features in the embodiments may be mutually combined under the situation of no conflict. In addition, although logical sequences are illustrated in the drawings, under certain circumstances, the illustrated or described steps may be executed according to sequences different from the sequence here.

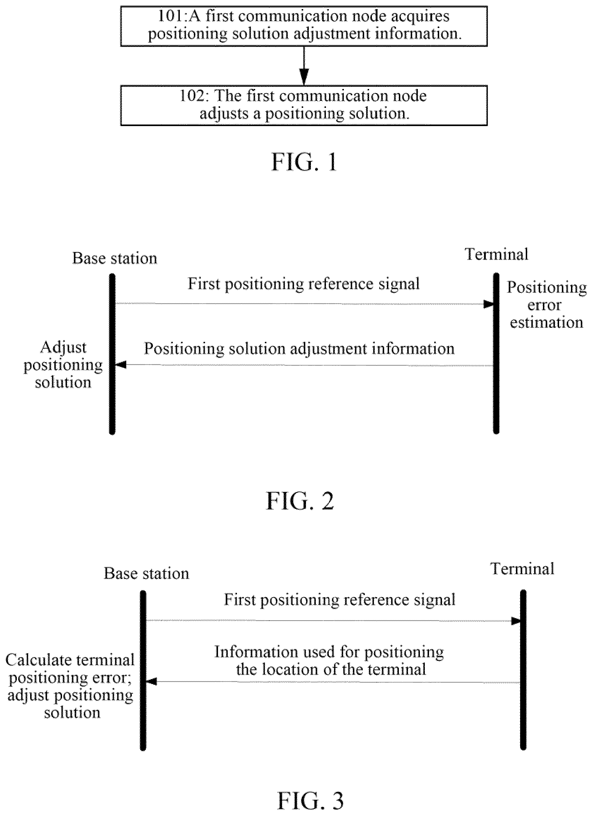

Implementation mode one: a method for enhancing positioning, as illustrated in FIG. 1, includes the following steps.

In step 101, a first communication node acquires positioning solution adjustment information, herein the positioning solution adjustment information at least contains one of the following: positioning error information for indicating a positioning error of a second communication node and positioning mode adjustment indication information.

In step 102, the first communication node adjusts a positioning solution.

In this implementation mode, the first communication node may be but not limited to a base station and the second communication node may be but not limited to a terminal; and this implementation mode is a working process on a base station side.

In an embodiment, that the first communication node adjusts the positioning solution may specifically include:
The first communication node adjusts the positioning solution according to the positioning solution adjustment information.

In an embodiment, the positioning solution adjustment information is generated by the second communication node, or is generated by an upper network element of the first communication node, or is generated by the first communication node.

In an embodiment, the second communication node, or the upper network element or the first communication node which generates the positioning solution adjustment information has already known an actual geographic location of the second communication node.

That the first communication node acquires the positioning solution adjustment information includes:
the second communication node or the upper network element compares the actual geographic location of the second communication node with a calculated location of the second communication node, generates the positioning solution adjustment information when an error between the actual geographic location and the calculated location is greater than a preset range, and sends the positioning solution adjustment information to the first communication node;
or the first communication node compares the actual geographic location of the second communication node with a calculated location of the second communication node and generates the positioning solution adjustment information when an error between the actual geographic location and the calculated location is greater than a preset range.

In an embodiment, before the first communication node acquires the positioning solution adjustment information, the method further includes: the first communication node sends a first positioning reference signal.

In an embodiment, before the first communication node acquires the positioning solution adjustment information, the method further includes: the first communication node receives, from the second communication node, information which is generated by the second communication node by using the first positioning reference signal and is used for positioning a location of the second communication node; and the first communication node or an upper node of the first communication node obtains a calculated location of the second communication node according to the information which is used for positioning the location of the second communication node.

Herein, the calculated location of the second communication node may be calculated by the second communication node itself according to the first positioning indication information.

In an embodiment, that the first communication node adjusts the positioning solution includes: the first communication node increases a sending density of the first positioning reference signal according to the positioning solution adjustment information.

In an embodiment, that the first communication node adjusts the positioning solution includes: the first communication node increases a sending power of the first positioning reference signal according to the positioning solution adjustment information.

In an embodiment, that the first communication node adjusts the positioning solution includes: the first communication node sends a second positioning reference signal according to the positioning solution adjustment information.

Herein, a generation mode of the second positioning reference signal is different from a generation mode of the first positioning reference signal.

Herein, in a long term evolution frame, a subframe set which allows sending of the second positioning reference signal is different from a subframe set which allows sending of the first positioning reference signal.

Herein, in a physical resource block of a long term evolution frame, a subcarrier which is used for sending the second positioning reference signal is different from a subcarrier which is used for sending the first positioning reference signal.

Herein, when the second positioning reference signal and the first positioning reference signal are sent on the same subframe of a long term evolution frame, physical resource blocks which are used thereby are different.

The first positioning reference signal is a positioning reference signal in Long Term Evolution LTE current standard.

In an embodiment, that the first communication node adjusts the positioning solution includes: the first communication node sends correction information according to the positioning solution adjustment information.

In an embodiment, the correction information is generated based on the positioning error information in the positioning solution adjustment information.

In an embodiment, the communication node which receives the correction information acquires information related to the location of the communication node according to the correction information.

In an embodiment, that the first communication node adjusts the positioning solution includes: the first communication node sends positioning mode indication information which is used for indicating the second communication node to use a designated positioning mode according to the positioning solution adjustment information.

In an embodiment, the communication node which receives the positioning mode indication information performs positioning according to the mode indicated by the positioning mode indication information.

Implementation mode two: a method for enhancing positioning includes:
a third communication node receives positioning information sent by a first communication node, herein the positioning information is obtained by the first communication node according to obtained positioning solution adjustment information, the positioning solution adjustment information at least containing one of the following: positioning error information and positioning mode adjustment indication information; and the third communication node acquires information for indicating a location of the third communication node.

In this implementation mode, the third communication node may be but not limited to a terminal. This implementation mode is a working process on a terminal side.

In an embodiment, that the third communication node acquires the information for indicating the location of the third communication node may specifically include:
the third communication node acquires the information for indicating the location of the third communication node according to the positioning information.

In an embodiment, the positioning solution adjustment information is generated by a second communication node, or an upper network element of the first communication node, or the first communication node.

In an embodiment, the second communication node, or the upper network element or the first communication node which generates the positioning solution adjustment information has already known an actual geographic location of the second communication node; and generates the positioning solution adjustment information when an error between the actual geographic location of the second communization node and a calculated location of the second communication node is greater than a preset range.

In an embodiment, before the first communication node acquires the positioning solution adjustment information, the first communication node sends a first positioning reference signal.

In an embodiment, the second communication node acquires information which is used for positioning a location of the second communication node by using the first positioning reference signal, and feeds the information back to the first communication node.

In an embodiment, the positioning information is the first positioning reference signal with a greater density.

In an embodiment, the positioning information is the first positioning reference signal sending power with a higher power.

In an embodiment, the positioning information is a second positioning reference signal.

Herein, a generation mode of the second positioning reference signal is different from a generation mode of the first positioning reference signal.

Herein, in a long term evolution frame, a subframe set which allows sending of the second positioning reference signal is different from a subframe set which allows sending of the first positioning reference signal.

Herein, in a physical resource block of a long term evolution frame, a subcarrier which is used for carrying the second positioning reference signal is different from a subcarrier which is used for carrying the first positioning reference signal.

Herein, when the second positioning reference signal and the first positioning reference signal are carried on the same subframe of a long term evolution frame, physical resource blocks which are used thereby are different.

The first positioning reference signal is a positioning reference signal in Long Term Evolution LTE current standard.

In an embodiment, the positioning information is correction information; and the correction information is generated based on the positioning error information in the positioning solution adjustment information.

In an embodiment, the positioning information is positioning mode indication information which is used for indicating the third communication node to use a designated positioning mode.

In an embodiment, the information for indicating the location of the third communication node is information related to the location of the third communication node and at least includes one of the following:
arrival time difference information measured by the third communication node;
positioning reference signal strength indication information measured by the third communication node;
information of communication nodes close to the third communication node;
positioning location information calculated by the third communication node; and
positioning mode information of the third communication node.

In an embodiment, the third communication node and the second communication node may be the same communication node.

Implementation mode three: a device for enhancing positioning provided in a first communication node includes:
an acquisition module 30 configured to acquire positioning solution adjustment information, herein the positioning solution adjustment information at least contains one of the following: positioning error information for indicating a positioning error of a second communication node and positioning mode adjustment indication information; and an adjustment module 31 configured to adjust a positioning solution.

In this implementation mode, the first communication node may be but not limited to a base station and the second communication node may be but not limited to a terminal.

In an embodiment, that the adjustment module 31 adjusts the positioning solution refers to that: the adjustment module 31 adjusts the positioning solution according to the positioning solution adjustment information.

In an embodiment, the positioning solution adjustment information is generated by the second communication node, or is generated by an upper network element of the first communication node, or is generated by the acquisition module 30.

In an embodiment, the second communication node, or the upper network element or the first communication node which generates the positioning solution adjustment information has already known an actual geographic location of the second communication node.

That the acquisition module 30 acquires the positioning solution adjustment information refers to that:
the acquisition module 30 receives the positioning solution adjustment solution from the second communication node or the upper network element; and the second communication node or the upper network element compares the actual geographic location of the second communication node with a calculated location of the second communication node, and generates the positioning solution adjustment information when an error between the actual geographic location and the calculated location is greater than a preset range;
or the acquisition module 30 compares the actual geographic location of the second communication node with a calculated location of the second communication node and generates the positioning solution adjustment information when an error between the actual geographic location and the calculated location is greater than a preset range.

In an embodiment, the acquisition module 30 is further configured to send a first positioning reference signal.

In an embodiment, before the first communication node acquires the positioning solution adjustment information, the acquisition module 30 is further configured to, before acquiring the positioning solution adjustment information, receive, from the second communication node, information which is generated by the second communication node by using the first positioning reference signal and is used for positioning a location of the second communication node; and obtain a calculated location of the second communication node according to the information which is used for positioning the location of the second communication node.

In an embodiment, that the adjustment module 31 adjusts the positioning solution refers to that: the adjustment module 31 increases a sending density of the first positioning reference signal according to the positioning solution adjustment information.

In an embodiment, that the adjustment module 31 adjusts the positioning solution refers to that: the adjustment module 31 increases a sending power of the first positioning reference signal according to the positioning solution adjustment information.

In an embodiment, that the adjustment module 31 adjusts the positioning solution refers to that: the adjustment module 31 sends a second positioning reference signal according to the positioning solution adjustment information.

In an embodiment, a generation mode of the second positioning reference signal is different from a generation mode of the first positioning reference signal.

In an embodiment, in a long term evolution frame, a subframe set which allows sending of the second positioning reference signal is different from a subframe set which allows sending of the first positioning reference signal.

In an embodiment, in a physical resource block of a long term evolution frame, a subcarrier which is used for sending the second positioning reference signal is different from a subcarrier which is used for sending the first positioning reference signal.

In an embodiment, physical resource blocks used when the second positioning reference signal and the first positioning reference signal are sent on the same subframe of a long term evolution frame are different.

In an embodiment, the first positioning reference signal is a positioning reference signal in Long Term Evolution LTE current standard.

In an embodiment, that the adjustment module 31 adjusts the positioning solution refers to that: the adjustment module 31 sends correction information according to the positioning solution adjustment information.

In an embodiment, the adjustment module 31 generates the correction information based on the positioning error information in the positioning solution adjustment information.

In an embodiment, that the adjustment module 31 adjusts the positioning solution refers to that: the adjustment module 31 sends positioning mode indication information which is used for indicating the second communication node to use a designated positioning mode according to the positioning solution adjustment information.

Implementation mode four: a device for enhancing positioning provided in a third communication node includes:
a receiving module 40 configured to receive positioning information sent by a first communication node, herein the positioning information is obtained by the first communication node according to obtained positioning solution adjustment information, the positioning solution adjustment information at least contains one of the following: positioning error information and positioning mode adjustment indication information; and an information acquisition module 41 configured to acquire information for indicating a location of the third communication node.

In an embodiment, that the information acquisition module 41 acquires the information for indicating the location of the third communication node refers to that: the information acquisition module 41 acquires the information for indicating the location of the third communication node according to the positioning information.

In an embodiment, the positioning solution adjustment information is generated by a second communication node, or an upper network element of the first communication node, or the first communication node.

In an embodiment, the second communication node, or the upper network element or the first communication node which generates the positioning solution adjustment information has already known an actual geographic location of the second communication node; and generates the positioning solution adjustment information when an error between the actual geographic location of the second communization node and a calculated location of the second communication node is greater than a preset range.

In an embodiment, the positioning information is the first positioning reference signal with a greater density.

In an embodiment, the positioning information is the first positioning reference signal sending power with a higher power.

In an embodiment, the positioning information is a second positioning reference signal.

In an embodiment, a generation mode of the second positioning reference signal is different from a generation mode of the first positioning reference signal.

In an embodiment, in a long term evolution frame, a subframe set which allows sending of the second positioning reference signal is different from a subframe set which allows sending of the first positioning reference signal.

In an embodiment, in a physical resource block of a long term evolution frame, a subcarrier which is used for carrying the second positioning reference signal is different from a subcarrier which is used for carrying the first positioning reference signal.

In an embodiment, physical resource blocks used when the second positioning reference signal and the first positioning reference signal are carried on the same subframe of a long term evolution frame are different.

Herein, the first positioning reference signal is a positioning reference signal in Long Term Evolution LTE current standard.

In an embodiment, the positioning information is correction information; and the correction information is generated based on the positioning error information in the positioning solution adjustment information.

In an embodiment, the positioning information is positioning mode indication information which is used for indicating the third communication node to use a designated positioning mode.

In an embodiment, the information for indicating the location of the third communication node at least includes one of the following:
arrival time difference information measured by the third communication node;
positioning reference signal strength indication information measured by the third communication node;
information of communication nodes close to the third communication node;
positioning location information calculated by the third communication node; and
positioning mode information of the third communication node.

In an embodiment, the third communication node and the second communication node are the same communication node.

In order to better understand the above-mentioned implementation modes, the embodiments of the present invention will be further described below with reference to the drawings in combination with the specific embodiments.

The embodiments of implementation mode 1 are as follows, herein the first communication node is a base station and the second communication node is a terminal.

### Embodiment 1

As illustrated in FIG. 2, a base station sends a first positioning reference signal. In the embodiment, the first positioning reference signal is a positioning reference signal of LTE current standard (TS36.211 v920).

A terminal which has already known an accurate location (i.e., actual geographical location) of itself calculates a location (called as a calculated location) of the terminal itself according to the first positioning reference signal.

If the terminal has already known the accurate location of the terminal itself and a difference between the calculated location and the accurate location is comparatively great, e.g., a horizontal or vertical distance does not satisfy positioning accuracy required by a system, the terminal sends positioning solution adjustment information to the base station, herein the positioning solution adjustment information at least contains one of the following: positioning error information for indicating a positioning error of the terminal and positioning mode adjustment indication information.

The base station adjusts a positioning solution according to the positioning solution adjustment information.

### Embodiment 2

As illustrated in FIG. 3, a base station sends a first positioning reference signal. In the embodiment, the first positioning reference signal is a positioning reference signal of LTE current standard.

A terminal calculates a location (called as a calculated location) of the terminal itself according to the first positioning reference signal.

The terminal sends the calculated location to the base station.

The base station has already known an accurate location of the terminal and compares the accurate location with the calculated location to acquire positioning error information, and if an error (positioning error) between the calculated location and the accurate location is comparatively great, e.g., a horizontal or vertical distance does not satisfy positioning accuracy required by a system, the base station adjusts a positioning solution according to the positioning error information.

### Embodiment 3

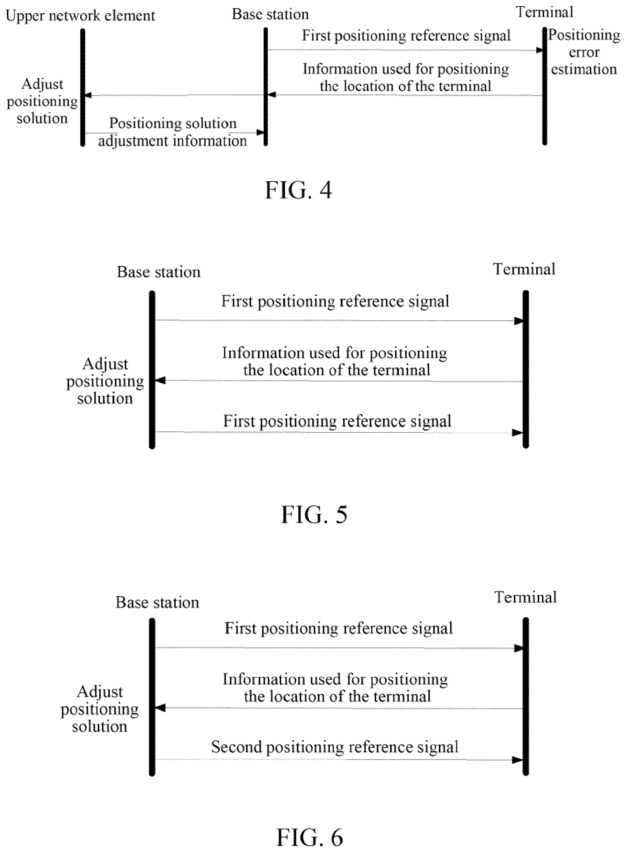

As illustrated in FIG. 4, a base station sends a first positioning reference signal. In the embodiment, the first positioning reference signal is a positioning reference signal of LTE current standard.

A terminal calculates a location (called as a calculated location) of the terminal itself according to the first positioning reference signal.

The terminal sends the calculated location to the base station.

An upper network element of the base station has already known accurate location information of the terminal and compares the accurate location with the calculated location to acquire positioning error information, and if an error between the calculated location and the accurate location is comparatively great, e.g., a horizontal or vertical distance does not satisfy positioning accuracy required by a system, the upper network element sends positioning solution adjustment information to the base station, herein the positioning solution adjustment information at least contains one of the following: positioning error information for indicating a positioning error of the terminal and positioning mode adjustment indication information.

The base station adjusts a positioning solution according to the positioning solution adjustment information.

### Embodiment 4

A base station sends a first positioning reference signal. In the embodiment, the first positioning reference signal is a positioning reference signal of LTE current standard.

A terminal calculates information which is used for positioning a location of the terminal itself according to the first positioning reference signal, e.g., arrival time differences or arrival times of first positioning reference signals sent by different base stations.

The terminal sends the information which is used for positioning the location of the terminal itself to the base station, and the base station calculates a location (called as a calculated location) of the terminal according to the information.

The base station has already known an accurate location of the terminal and compares the accurate location of the terminal with the calculated location to acquire positioning error information, and if an error between the calculated location and the accurate location is comparatively great, e.g., a horizontal or vertical distance does not satisfy positioning accuracy required by a system, the base station adjusts a positioning solution according to the positioning error information.

### Embodiment 5

A base station sends a first positioning reference signal. In the embodiment, the first positioning reference signal is a positioning reference signal of LTE current standard.

A terminal calculates information which is used for positioning a location of the terminal itself according to the first positioning reference signal, e.g., arrival time differences or arrival times of first positioning reference signals sent by different base stations.

The terminal sends the information which is used for positioning the location of the terminal itself to the base station, an upper network element of the base station calculates a location (called as a calculated location) of the terminal according to the information, the upper network element has already known an accurate location of the terminal and compares the accurate location of the terminal with the calculated location to acquire positioning error information, and if an error between the calculated location and the accurate location is comparatively great, e.g., a horizontal or vertical distance does not satisfy positioning accuracy required by a system, the upper network element sends positioning solution adjustment information to the base station, in the embodiment, the positioning solution adjustment information at least contains one of the following: positioning error information for indicating a positioning error of the terminal and positioning mode adjustment indication information.

The base station adjusts a positioning solution according to the positioning solution adjustment information.

From embodiments 1-5, it can be seen that the base station itself may compare the accurate location with the calculated location and generate the positioning mode adjustment information when the positioning error is greater than the preset range, and also the terminal or the upper network element of the base station may make a comparison, generate the positioning mode adjustment information when the positioning error is greater than the preset range and send the positioning mode adjustment information to the base station.

The calculated location may be calculated by the terminal itself according to first positioning indication information sent by the base station, and also the terminal may calculate information which is used for positioning the location of the terminal itself according to the first positioning reference signal and then send the information to the base station, and finally the base station or the upper network element obtains the calculated location.

### Embodiment 6

As illustrated in FIG. 5, a base station sends a first positioning reference signal (called as positioning reference signal A). In the embodiment, the first positioning reference signal is a positioning reference signal of LTE current standard.

The base station acquires positioning solution adjustment information, herein the positioning solution adjustment information may be sent by a terminal to the base station and may also be sent by an upper network element to the base station or be obtained by the base station itself according to existing information.

The base station sends a first positioning reference signal (called as positioning reference signal B) again, herein the sending density of the positioning reference signal B in time domain and/or frequency domain is greater than the sending density of the positioning reference signal A.

### Embodiment 7

A base station sends a first positioning reference signal (called as positioning reference signal A). In the embodiment, the first positioning reference signal is a positioning reference signal of LTE current standard.

The base station acquires positioning solution adjustment information, herein the positioning solution adjustment information may be sent by a terminal to the base station and may also be sent by an upper network element to the base station or be obtained by the base station itself according to existing information.

The base station sends a first positioning reference signal (called as positioning reference signal B) again, herein the sending power of the positioning reference signal B is greater than the sending power of the positioning reference signal A.

### Embodiment 8

As illustrated in FIG. 6, a base station acquires positioning solution adjustment information, herein the positioning solution adjustment information may be sent by a terminal to the base station and may also be sent by an upper network element to the base station or be obtained by the base station itself according to existing information.

The base station sends a second positioning reference signal, herein a sequence generation mode of the second positioning reference signal is different from a sequence generation mode of the first positioning reference signal. In the embodiment, the first positioning reference signal is a positioning reference signal in LTE current standard. The second positioning reference signal is a positioning reference signal which is put forward and newly added in the embodiment of the present invention.

### Embodiment 9

A base station acquires positioning solution adjustment information, herein the positioning solution adjustment information may be sent by a terminal to the base station and may also be sent by an upper network element to the base station or be obtained by the base station itself according to existing information.

The base station sends a second positioning reference signal, herein in a long term evolution frame, a subframe set which allows sending of the second positioning reference signal is the same as a subframe set which allows sending of a first positioning reference signal. In the embodiment, the first positioning reference signal is a positioning reference signal in LTE current standard.

### Embodiment 10

A base station acquires positioning solution adjustment information, herein the positioning solution adjustment information may be sent by a terminal to the base station and may also be sent by an upper network element to the base station or be obtained by the base station itself according to existing information.

The base station sends a second positioning reference signal, herein in a long term evolution frame, a subframe set which allows sending of the second positioning reference signal is different from a subframe set which allows sending of a first positioning reference signal. In the embodiment, the first positioning reference signal is a positioning reference signal in LTE current standard.

### Embodiment 11

A base station acquires positioning solution adjustment information, herein the positioning solution adjustment information may be sent by a terminal to the base station and may also be sent by an upper network element to the base station or be obtained by the base station itself according to existing information.

The base station sends a second positioning reference signal, herein in a physical resource block of a long term evolution frame, a subcarrier which is used for sending the second positioning reference signal is different from a subcarrier which is used for sending a first positioning reference signal. In the embodiment, the first positioning reference signal is a positioning reference signal in LTE current standard.

### Embodiment 12

A base station acquires positioning solution adjustment information, herein the positioning solution adjustment information may be sent by a terminal to the base station and may also be sent by an upper network element to the base station or be obtained by the base station itself according to existing information.

The base station sends a second positioning reference signal, herein when the second positioning reference signal and a first positioning reference signal are sent on the same subframe of a long term evolution frame, physical resource blocks which are used thereby are different. In the embodiment, the first positioning reference signal is a positioning reference signal in LTE current standard.

### Embodiment 13

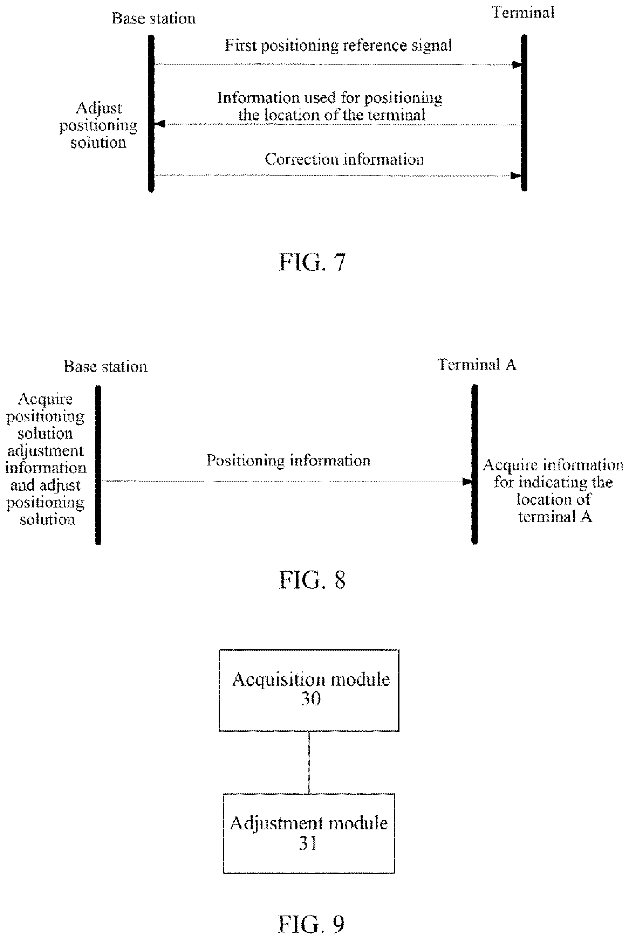

As illustrated in FIG. 7, a base station acquires positioning solution adjustment information, herein the positioning solution adjustment information may be sent by a terminal to the base station and may also be sent by an upper network element to the base station or be obtained by the base station itself according to existing information.

The base station sends correction information.

After the terminal to be positioned receives the correction information, the correction information needs to be considered when the terminal calculates a location of the terminal itself.

### Embodiment 14

A base station acquires positioning solution adjustment information, herein the positioning solution adjustment information may be sent by a terminal to the base station and may also be sent by an upper network element to the base station or be obtained by the base station itself according to existing information.

The base station sends positioning mode indication information, which, for example, is used for indicating the terminal to be positioned to change from measurement of arrival time difference of positioning reference signals to measurement of signal receiving strength or change from measurement of a positioning reference signal sent by the base station to measurement of a positioning reference signal sent by another positioning system (such as a satellite positioning system, a professional ground positioning system), or requires the terminal to feed back more contents related to location information, such as location information acquired based on another positioning mode or a content which has smaller quantification error and is related to location information.

In this embodiment, when the terminal accesses to a network, the base station may know a positioning mode (such as a positioning mode A, a positioning mode B) which can be supported by the terminal according to parameter information (such as capability level information) of the terminal. The base station may select a suitable positioning mode to provide positioning services for the terminal according to the positioning mode which can be supported by the terminal and the positioning accuracy, and send the positioning mode indication information to allow the terminal to change to use the selected positioning mode to perform positioning.

From embodiments 6-14, it can be seen that a solution for a base station to adjust a positioning mode includes: adjusting sending power/density of first positioning reference information; or sending second positioning reference information; or sending correction information; or sending positioning mode indication information.

### Embodiment 15

A terminal to be positioned acquires positioning solution adjustment information and sends the positioning solution adjustment information to a base station.

Embodiments of the implementation mode two are as follows, herein the first communication node is a base station, the second communication node is a terminal B and the third communication node is a terminal A.

### Embodiment 16

As illustrated in FIG. 8, a terminal A receives positioning information sent by a base station, herein the positioning information is obtained by the base station according to obtained positioning solution adjustment information, the positioning solution adjustment information at least contains one of the following: positioning error information for indicating a positioning error of a terminal B (reference terminal, of which an accurate location has already been known by a system) and positioning mode adjustment indication information. In the embodiment, the positioning solution adjustment information is generated by the terminal B when it is found that a positioning error does not satisfy a positioning accuracy demand (a positioning error is greater than a preset range) after comparing a calculated location obtained through first positioning reference information provided by the base station with the accurate location of the terminal itself.

The terminal A acquires information for indicating a location of the terminal A itself according to the positioning information.

In the embodiment, the terminal A and the terminal B may also be the same terminal.

### Embodiment 17

A terminal A receives positioning information sent by a base station, herein the positioning information is obtained by the base station according to obtained positioning solution adjustment information, the positioning solution adjustment information at least contains one of the following: positioning error information for indicating a positioning error of a terminal B (reference terminal, of which an accurate location has already been known by a system) and positioning mode adjustment indication information. In the embodiment, the positioning solution adjustment information is generated by an upper network element of the base station when it is found that a positioning error does not satisfy a positioning accuracy demand after comparing the accurate location of the terminal B with a calculated location of the terminal B.

The terminal A acquires information for indicating a location of the terminal A itself according to the positioning information.

In the embodiment, the terminal A and the terminal B may also be the same terminal.

### Embodiment 18

A terminal A receives positioning information sent by a base station, herein the positioning information is obtained by the base station according to obtained positioning solution adjustment information, the positioning solution adjustment information at least contains one of the following: positioning error information for indicating a positioning error of a terminal B (reference terminal, of which an accurate location has already been known by a system) and positioning mode adjustment indication information. In the embodiment, the positioning solution adjustment information is generated by the base station when it is found that a positioning error does not satisfy a positioning accuracy demand after comparing the accurate location of the terminal B with a calculated location of the terminal B.

The terminal A acquires information for indicating a location of the terminal A itself according to the positioning information.

In the embodiment, the terminal A and the terminal B may also be the same terminal.

### Embodiment 19

A terminal A receives positioning information sent by a base station, herein the positioning information is a first positioning reference signal (positioning reference signal B) with a greater sending density than that of a first positioning reference signal (positioning reference signal A) previously sent by the base station in time domain and/or frequency domain. In the embodiment, the first positioning reference signal is a positioning reference signal in LTE current standard.

The terminal A acquires information for indicating a location of the terminal A itself based on the positioning reference signal B with the greater density.

### Embodiment 20

A terminal A receives positioning information sent by a base station, herein the positioning information is a first positioning reference signal (positioning reference signal B) with higher sending power than that of a first positioning reference signal (positioning reference signal A) previously sent by the base station. In the embodiment, the first positioning reference signal is a positioning reference signal in LTE current standard.

The terminal A acquires information for indicating a location of the terminal A itself based on the positioning reference signal B with the higher power.

### Embodiment 21

A terminal A receives positioning information sent by a base station, herein the positioning information is a second positioning reference signal and a sequence generation mode of the second positioning reference signal is different from a sequence generation mode of a first positioning reference signal. In the embodiment, the first positioning reference signal is a positioning reference signal in LTE current standard.

The terminal A acquires information for indicating a location of the terminal A itself based on the second positioning reference signal.

### Embodiment 22

A terminal A receives positioning information sent by a base station, herein the positioning information is a second positioning reference signal, and in a long term evolution frame, a subframe set which allows sending of the second positioning reference signal is different from a subframe set which allows sending of the first positioning reference signal. In the embodiment, the first positioning reference signal is a positioning reference signal in LTE current standard.

The terminal A acquires information for indicating a location of the terminal A itself based on the second positioning reference signal.

### Embodiment 23

A terminal A receives positioning information sent by a base station, herein the positioning information is a second positioning reference signal, and in a physical resource block of a long term evolution frame, a subcarrier which is used for sending the second positioning reference signal is different from a subcarrier which is used for sending a first positioning reference signal. In the embodiment, the first positioning reference signal is a positioning reference signal in LTE current standard.

The terminal A acquires information indicating a location of the terminal A itself based on the second positioning reference signal.

### Embodiment 24

A terminal A receives positioning information sent by a base station, herein the positioning information is a second positioning reference signal, and when the second positioning reference signal and a first positioning reference signal are sent on the same subframe of a long term evolution frame, physical resource blocks which are used thereby are different. In the embodiment, the first positioning reference signal is a positioning reference signal in LTE current standard.

The terminal A acquires information for indicating a location of the terminal A itself based on the second positioning reference signal.

### Embodiment 25

A terminal A receives positioning information sent by a base station, herein the positioning information is a second positioning reference signal, and time-frequency resources which are used by the second positioning reference signal and a first positioning reference signal are different. In the embodiment, the first positioning reference signal is a positioning reference signal in LTE current standard.

The terminal A acquires information for indicating a location of the terminal A itself based on the second positioning reference signal.

### Embodiment 26

A terminal A receives positioning information sent by a base station, herein the positioning information is correction information sent by the base station.

The terminal A acquires information for indicating a location of the terminal A itself based on the correction information. For example, a calculated location (x, y, z) of the terminal A is calculated based on a positioning reference signal sent by the base station, then correction information (dx, dy, dz) is added on the basis of the calculated location, and a final obtained location is (x, y, z) + alpha*(dx, dy, dz), herein alpha may be decided by the terminal A itself or be notified by the base station to the terminal A.

### Embodiment 27

A terminal A receives positioning information sent by a base station, herein the positioning information is positioning mode indication information, which, for example, is used for indicating the terminal A to be positioned to change from measurement of arrival time difference of positioning reference signals to measurement of signal receiving strength or change from measurement of a positioning reference signal sent by the base station to measurement of a positioning reference signal sent by another positioning system (such as a satellite positioning system, a professional ground positioning system), or requires the terminal to feed back more contents related to location information, such as location information acquired based on another positioning mode or a content which has smaller quantification error and is related to location information.

The terminal A acquires information for indicating a location of the terminal A itself based on the positioning mode indication information, i.e., information related to the location of the terminal A itself. In the embodiment, the information contains a mode used by a terminal for positioning a location, which, for example, is based on arrival time, or is based on measurement signal receiving strength or is based on the type of the positioning system.

An embodiment when implementation mode one and implementation mode two is as follow:

### Embodiment 28

A base station acquires positioning solution adjustment information, herein the positioning solution adjustment information at least contains one of the following: positioning error information for indicating a positioning error of a terminal B and positioning mode adjustment indication information. For a mode that the base station acquires the positioning solution adjustment information, a reference may be made to the above-mentioned embodiments.

The base station adjusts a positioning solution and sends positioning information. For a mode that the base station adjusts the positioning solution, a reference may be made to the above-mentioned embodiments.

A terminal A receives the positioning formation sent by the base station.

The terminal A acquires information for indicating a location of the terminal A based on the positioning information. For specific details, a reference may be made to the above-mentioned embodiments.

### Embodiment 29

The embodiment of the present invention further provides a computer-readable storage medium, storing program instructions, which, when executed, are capable of implementing the method for enhancing positioning provided by implementation mode one of the present invention.

### Embodiment 30

The embodiment of the present invention further provides a computer-readable storage medium, storing program instructions, which, when executed, are capable of implementing the method for enhancing positioning provided by implementation mode two of the present invention.

One skilled in the art can understand that all or partial steps in the above-mentioned embodiments may be implemented by using a computer program process, the computer program may be stored in a computer-readable storage medium, the computer program is executed on a corresponding hardware platform (e.g., a system, equipment, an apparatus or a device), and when being executed, it includes one or combinations of the steps of the method embodiments.

Alternatively, all or partial steps in the above-mentioned embodiments may also be implemented by using integrated circuits, and these steps may be respectively manufactured into integrated circuit modules, or multiple modules or steps thereof may be manufactured into a single integrated circuit module to implement.

Each device/function module/function unit in the above-mentioned embodiments may be implemented by adopting a general-purpose computing device, and they may be integrated on a single computing device and may also be distributed on a network consisting of a plurality of computing devices.

When each device/function module/function unit in the above-mentioned embodiments is implemented in the form of software function module and is sold or used as an independent product, it may be stored in a computer-readable storage medium. The above-mentioned computer-readable storage medium may be a read-only memory, a magnetic disk, a compact disk or the like.

### Industrial Applicability

The embodiments of the present invention realize the goals of adaptively adjusting a positioning solution according to actual changes of environmental factors and improving positioning accuracy.

## Claims

1. A method for enhancing positioning, comprising:
a first communication node acquiring positioning solution adjustment information, wherein the positioning solution adjustment information at least contains one of the following: positioning error information for indicating a positioning error of a second communication node and positioning mode adjustment indication information; and
the first communication node adjusting a positioning solution.

2. The method according to claim 1, wherein the first communication node adjusting the positioning solution comprises:
the first communication node adjusting the positioning solution according to the positioning solution adjustment information.

3. The method according to claim 1, wherein,
the positioning solution adjustment information is generated by the second communication node, or is generated by an upper network element of the first communication node, or is generated by the first communication node.

4. The method according to claim 3, wherein,
the second communication node, or the upper network element or the first communication node which generates the positioning solution adjustment information has already known an actual geographic location of the second communication node; and
the first communication node acquiring the positioning solution adjustment information comprises:
the second communication node or the upper network element comparing the actual geographic location of the second communication node with a calculated location of the second communication node, generating the positioning solution adjustment information when an error between the actual geographic location and the calculated location is greater than a preset range, and sending the positioning solution adjustment information to the first communication node;
or the first communication node comparing the actual geographic location of the second communication node with a calculated location of the second communication node and generating the positioning solution adjustment information when an error between the actual geographic location and the calculated location is greater than a preset range.

5. The method according to claim 1, wherein, before the first communication node acquires the positioning solution adjustment information, the method further comprises:
the first communication node sending a first positioning reference signal.

6. The method according to claim 5, wherein, before the first communication node acquires the positioning solution adjustment information, the method further comprises:
the first communication node receiving, from the second communication node, information which is generated by the second communication node by using the first positioning reference signal and is used for positioning a location of the second communication node; and
the first communication node or an upper node of the first communication node obtaining a calculated location of the second communication node according to the information which is used for positioning the location of the second communication node.

7. The method according to claim 5, wherein the first communication node adjusting the positioning solution comprises:
the first communication node increasing a sending density of the first positioning reference signal according to the positioning solution adjustment information.

8. The method according to claim 5, wherein the first communication node adjusting the positioning solution comprises:
the first communication node increasing a sending power of the first positioning reference signal according to the positioning solution adjustment information.

9. The method according to claim 1, wherein the first communication node adjusting the positioning solution comprises:
the first communication node sending a second positioning reference signal according to the positioning solution adjustment information.

10. The method according to claim 9, wherein,
a generation mode of the second positioning reference signal is different from a generation mode of the first positioning reference signal.

11. The method according to claim 9, wherein,
in a long term evolution frame, a subframe set which allows sending of the second positioning reference signal is different from a subframe set which allows sending of the first positioning reference signal.

12. The method according to claim 9, wherein,
in a physical resource block of a long term evolution frame, a subcarrier which is used for sending the second positioning reference signal is different from a subcarrier which is used for sending the first positioning reference signal.

13. The method according to claim 9, wherein,
physical resource blocks used when the second positioning reference signal and the first positioning reference signal are sent on a same subframe of a long term evolution frame are different.

14. The method according to any one of claims 10-13, wherein,
the first positioning reference signal is a positioning reference signal in Long Term Evolution LTE standard TS 36.211 v920.

15. The method according to claim 1, wherein the first communication node adjusting the positioning solution comprises:
the first communication node sending correction information according to the positioning solution adjustment information.

16. The method according to claim 15, wherein,
the correction information is generated based on the positioning error information in the positioning solution adjustment information.

17. The method according to claim 1, wherein the first communication node adjusting the positioning solution comprises:
the first communication node sending positioning mode indication information which is used for indicating the second communication node to use a designated positioning mode according to the positioning solution adjustment information.

18. A method for enhancing positioning, comprising:
a third communication node receiving positioning information sent by a first communication node, wherein the positioning information is obtained by the first communication node according to obtained positioning solution adjustment information, the positioning solution adjustment information at least contains one of the following: positioning error information and positioning mode adjustment indication information; and
the third communication node acquiring information for indicating a location of the third communication node.

19. The method according to claim 18, wherein the third communication node acquiring the information for indicating the location of the third communication node comprises:
the third communication node acquiring the information for indicating the location of the third communication node according to the positioning information.

20. The method according to claim 18, wherein,
the positioning solution adjustment information is generated by a second communication node, or an upper network element of the first communication node, or the first communication node.

21. The method according to claim 20, wherein,
the second communication node, or the upper network element or the first communication node which generates the positioning solution adjustment information has already known an actual geographic location of the second communication node; and generates the positioning solution adjustment information when an error between the actual geographic location of the second communization node and a calculated location of the second communication node is greater than a preset range.

22. The method according to claim 18, wherein,
the positioning information is the first positioning reference signal with a greater density.

23. The method according to claim 18, wherein,
the positioning information is the first positioning reference signal sending power with a higher power.

24. The method according to claim 18, wherein,
the positioning information is a second positioning reference signal.

25. The method according to claim 24, wherein,
a generation mode of the second positioning reference signal is different from a generation mode of the first positioning reference signal.

26. The method according to claim 24, wherein,
in a long term evolution frame, a subframe set which allows sending of the second positioning reference signal is different from a subframe set which allows sending of the first positioning reference signal.

27. The method according to claim 24, wherein,
in a physical resource block of a long term evolution frame, a subcarrier which is used for carrying the second positioning reference signal is different from a subcarrier which is used for carrying the first positioning reference signal.

28. The method according to claim 24, wherein,
physical resource blocks used when the second positioning reference signal and the first positioning reference signal are carried on a same subframe of a long term evolution frame are different.

29. The method according to any one of claims 22, 23 and 25-28, wherein,
the first positioning reference signal is a positioning reference signal in Long Term Evolution LTE standard TS 36.211 v920.

30. The method according to claim 18, wherein,
the positioning information is correction information; and the correction information is generated based on the positioning error information in the positioning solution adjustment information.

31. The method according to claim 18, wherein,
the positioning information is positioning mode indication information which is used for indicating the third communication node to use a designated positioning mode.

32. The method according to claim 18, wherein the information for indicating the location of the third communication node at least comprises one of the following:
arrival time difference information measured by the third communication node;
positioning reference signal strength indication information measured by the third communication node;
information of communication nodes close to the third communication node;
positioning location information calculated by the third communication node; and
positioning mode information of the third communication node.

33. The method according to claim 20, wherein,
the third communication node and the second communication node are the same communication node.

34. A device for enhancing positioning, provided in a first communication node, comprising:
an acquisition module configured to acquire positioning solution adjustment information, wherein the positioning solution adjustment information at least contains one of the following: positioning error information for indicating a positioning error of a second communication node and positioning mode adjustment indication information; and
an adjustment module configured to adjust a positioning solution.

35. The device according to claim 34, wherein that the adjustment module adjusts the positioning solution refers to that:
the adjustment module adjusts the positioning solution according to the positioning solution adjustment information.

36. The device according to claim 34, wherein,
the positioning solution adjustment information is generated by the second communication node, or is generated by an upper network element of the first communication node, or is generated by the acquisition module.

37. The device according to claim 36, wherein,
the second communication node, or the upper network element or the acquisition module which generates the positioning solution adjustment information has already known an actual geographic location of the second communication node; and
that the acquisition module acquires the positioning solution adjustment information refers to that:
the acquisition module receives the positioning solution adjustment solution from the second communication node or the upper network element; and the second communication node or the upper network element compares the actual geographic location of the second communication node with a calculated location of the second communication node, and generates the positioning solution adjustment information when an error between the actual geographic location and the calculated location is greater than a preset range; and
or the acquisition module compares the actual geographic location of the second communication node with a calculated location of the second communication node and generates the positioning solution adjustment information when an error between the actual geographic location and the calculated location is greater than a preset range.

38. The device according to claim 34, wherein,
the acquisition module is further configured to send a first positioning reference signal.

39. The device according to claim 38, wherein, before the first communication node acquires the positioning solution adjustment information,
the acquisition module is further configured to, before acquiring the positioning solution adjustment information, receive, from the second communication node, information which is generated by the second communication node by using the first positioning reference signal and is used for positioning a location of the second communication node; and obtain a calculated location of the second communication node according to the information which is used for positioning the location of the second communication node.

40. The device according to claim 38, wherein that the adjustment module adjusts the positioning solution refers to that:
the adjustment module increases a sending density of the first positioning reference signal according to the positioning solution adjustment information.

41. The device according to claim 38, wherein that the adjustment module adjusts the positioning solution refers to that:
the adjustment module increases a sending power of the first positioning reference signal according to the positioning solution adjustment information.

42. The device according to claim 34, wherein that the adjustment module adjusts the positioning solution refers to that:
the adjustment module sends a second positioning reference signal according to the positioning solution adjustment information.

43. The device according to claim 42, wherein,
a generation mode of the second positioning reference signal is different from a generation mode of the first positioning reference signal.

44. The device according to claim 42, wherein,
in a long term evolution frame, a subframe set which allows sending of the second positioning reference signal is different from a subframe set which allows sending of the first positioning reference signal.

45. The device according to claim 42, wherein,
in a physical resource block of a long term evolution frame, a subcarrier which is used for sending the second positioning reference signal is different from a subcarrier which is used for sending the first positioning reference signal.

46. The device according to claim 42, wherein,
physical resource blocks used when the second positioning reference signal and the first positioning reference signal are sent on the same subframe of a long term evolution frame are different.

47. The device according to claims 43-46, wherein,
the first positioning reference signal is a positioning reference signal in Long Term Evolution LTE standard TS 36.211 v920.

48. The device according to claim 34, wherein that the adjustment module adjusts the positioning solution refers to that:
the adjustment module sends correction information according to the positioning solution adjustment information.

49. The device according to claim 48, wherein,
the adjustment module generates the correction information based on the positioning error information in the positioning solution adjustment information.

50. The device according to claim 34, wherein that the adjustment module adjusts the positioning solution refers to that:
the adjustment module sends positioning mode indication information which is used for indicating the second communication node to use a designated positioning mode according to the positioning solution adjustment information.

51. A device for enhancing positioning, provided in a third communication node, comprising:
a receiving module configured to receive positioning information sent by a first communication node, wherein the positioning information is obtained by the first communication node according to obtained positioning solution adjustment information, the positioning solution adjustment information at least contains one of the following: positioning error information and positioning mode adjustment indication information; and
an information acquisition module configured to acquire information for indicating a location of the third communication node.

52. The device according to claim 51, wherein that the information acquisition module acquires the information for indicating the location of the third communication node refers to that:
the information acquisition module acquires the information for indicating the location of the third communication node according to the positioning information.

53. The device according to claim 51, wherein,
the positioning solution adjustment information is generated by a second communication node, or an upper network element of the first communication node, or the first communication node.

54. The device according to claim 53, wherein,
the second communication node, or the upper network element or the first communication node which generates the positioning solution adjustment information has already known an actual geographic location of the second communication node; and generates the positioning solution adjustment information when an error between the actual geographic location of the second communization node and a calculated location of the second communication node is greater than a preset range.

55. The device according to claim 51, wherein,
the positioning information is the first positioning reference signal with a greater density.

56. The device according to claim 51, wherein,
the positioning information is the first positioning reference signal sending power with a higher power.

57. The device according to claim 51, wherein,
the positioning information is a second positioning reference signal.

58. The device according to claim 57, wherein,
a generation mode of the second positioning reference signal is different from a generation mode of the first positioning reference signal.

59. The device according to claim 57, wherein,
in a long term evolution frame, a subframe set which allows sending of the second positioning reference signal is different from a subframe set which allows sending of the first positioning reference signal.

60. The device according to claim 57, wherein,
in a physical resource block of a long term evolution frame, a subcarrier which is used for carrying the second positioning reference signal is different from a subcarrier which is used for carrying the first positioning reference signal.

61. The device according to claim 57, wherein,
physical resource blocks used when the second positioning reference signal and the first positioning reference signal are carried on a same subframe of a long term evolution frame are different.

62. The device according to any one of claims 55, 56 and 58-61, wherein,
the first positioning reference signal is a positioning reference signal in Long Term Evolution LTE standard TS 36.211 v920.

63. The device according to claim 51, wherein,
the positioning information is correction information; and the correction information is generated based on the positioning error information in the positioning solution adjustment information.

64. The device according to claim 51, wherein,
the positioning information is positioning mode indication information which is used for indicating the third communication node to use a designated positioning mode.

65. The device according to claim 51, wherein the information for indicating the location of the third communication node at least comprises one of the following:
arrival time difference information measured by the third communication node;
positioning reference signal strength indication information measured by the third communication node;
information of communication nodes close to the third communication node;
positioning location information calculated by the third communication node; and
positioning mode information of the third communication node.

66. The device according to claim 53, wherein,
the third communication node and the second communication node are the same communication node.
